# EUROPÄISCHE PATENTSCHRIFT

(11) **EP 0 489 791 B1**
(45) Veröffentlichungstag und Bekanntmachung des Hinweises auf die Patenterteilung: **24.02.1993**
(21) Anmeldenummer: 90912912.4
(22) Anmeldetag: 16.08.1990
(51) Int. Cl.: F24J 2/52

(54) **VORRICHTUNG ZUR FESTLEGUNG UND ABSTÜTZUNG VON KOLLEKTORELEMENTEN**
DEVICE FOR SECURING AND SUPPORTING SOLAR UNITS
DISPOSITIF POUR L'ORIENTATION ET LE SUPPORT D'ELEMENTS DE COLLECTEUR

(30) Priorität: 16.08.1989 DE 3926967
(43) Veröffentlichungstag der Anmeldung: 17.06.1992
(73) Patentinhaber: KIRCHMAYER, Leonhard, D-80333 München (DE)
(72) Erfinder: KIRCHMAYER, Leonhard, D-80333 München (DE)
(74) Vertreter: Patentanwälte Leinweber & Zimmermann
(86) Internationale Anmeldenummer: EP9001348
(87) Internationale Veröffentlichungsnummer: WO9102930

(56) Entgegenhaltungen:
- CH-A- 653 464
- US-A- 3 970 274
- US-A- 4 269 173
- US-A- 4 794 909

## Beschreibung

Die Erfindung bezieht sich auf eine Vorrichtung zur Festlegung und Abstützung von an der Außenseite eines Gebäudes festlegbaren, miteinander kuppelbaren, einen Sonnenkollektor bildenden Kollektorelementen, die jeweils einen Grundkörper mit mindestens einem in einer der Sonne zugewandten Ebene liegenden, an ein Wärmeträgernetz anschließbaren Kollektorkanal aufweisen und denen rückseitig mindestens eine quer abstehende, eine Bohrung zur Aufnahme einer Befestigungsschraube aufweisenden Befestigungslasche zur auf die Sonne ausgerichteten Festlegung an einem Tragbock, -gerüst oder -pfahl zugeordnet ist, der eine der Befestigungslasche entsprechende Gegenlasche umfaßt.

Bei einem bekannten Sonnenkollektor (US-PS 43 00 537) ist das Sonnenkollektorelement selbst so ausgeführt, daß es ausreichend steif und stabil ist, um die Stützkräfte zur Befestigungslasche und von dieser zur Gegenlasche zu übertragen. Gleichzeitig muß das Sonnenkollektorelement die für die eigentliche Funktion notwendigen, der Energiesammlung dienenden Bauelemente enthalten. Dieses Sonnenkollektorelement weist deshalb einen den unterschiedlichen -Forderungen Rechnung tragenden, entsprechend komplexen und dementsprechend kostspieligen Aufbau auf.

Der Erfindung liegt die Aufgabe zugrunde, eine Vorrichtung der eingangs genannten Art zu schaffen, mit deren Hilfe sich Sonnenkollektorelemente einfach und bequem in der jeweils erforderlichen optimalen Ausrichtung auf die Sonne und- in Bezug auf benachbarte Sonnenkollektorelemente stabil und dauerhaft festlegen lassen.

Die Vorrichtung nach der Erfindung, bei der diese Aufgabe gelöst ist, ist im wesentlichen dadurch gekennzeichnet, daß die Befestigungslasche auf der Unterseite einer Tragplatte vorgesehen ist, wobei die Tragplatte auf ihrer Unterseite Versteifungsleisten aufweist, daß mindestens die sich längs der Seitenränder der Tragplatte erstreckenden Versteifungsleisten mit halbzylindrischen Bohrungen zur Aufnahme von den Grundkörper in ebenfalls halbzylindrischen Bohrungen durchsetzenden Spannschrauben für die Grundkörperfixierung an der Tragplatte oder für die gegenseitige Verspannung benachbarter Grundkörper auf benachbarten Tragplatten versehen sind und daß den nach oben weisenden Rändern zweier benachbarter Grundkörper oder den Versteifungsleisten zweier benachbarter Tragplatten eine sie gegenseitig verspannenden Abdeckschiene mit Bohrungen zugeordnet ist, deren Lage auf die Lage der Bohrungen in den versteifungsleisten der Tragplatten oder der Bohrungen in den Grundkörpern abgestimmt ist. Mit Hilfe derartiger Tragplatten ist die Möglichkeit gegeben, die gewünschte Abstützung von Sonnenkollektorelementen in Positionen relativ zur tragenden Unterkonstruktion und auch zur Sonne zu erreichen, die eine optimale Ausrichtung auf und Bestrahlung durch die Sonne gewährleistet, und zwar entweder an einem speziellen Tragbock oder an einem Gerüst oder Pfahl, beispielsweise einem Zaunpfahl. In letzterem Fall erfüllt ein Zaunpfahl somit eine doppelte Funktion, einerseits dient er der Halterung der Begrenzungselemente und zum anderen gleichzeitig der Sonnenkollektorelemente. Bei günstigem Verlauf bzw. Ausrichtung der Begrenzungslinie können die Sonnenkollektorelemente nach der Montage ihrer Tragplatten an den Zaunpfählen in sehr kostensparender Weise gleichzeitig die Begrenzungselemente bilden. Normalerweise weist die Tragplatte eine Plattenfläche auf, die der Ausdehnung bzw. Größe des auf ihr festzulegenden Grundkörpers entspricht. Es sind jedoch auch Ausführungen möglich, bei denen die Tragplatte zwei oder gar mehrere Grundplatten nebeneinander als Baueinheit trägt.

Wenn in weiterer Ausgestaltung die Abdeckschiene die , Ränder der Grundkörper oder die benachbarten Versteifungsleisten übergreifende Schenkel aufweist, die miteinander einen spitzen Winkel einschließen, läßt sich durch Anziehen der Spannschrauben die gegenseitige Verbindung der Grundkörper mitsamt den sie tragenden Tragplatten auf besonders elegante Weise erreichen.

Vorteile der Erfindung ergeben sich aus der folgenden Beschreibung und der Zeichnung, auf die bezüglich der Offenbarung aller nicht im Text beschriebenen Einzelheiten ausdrücklich verwiesen wird.

Es zeigen:
Fig. 1 eine schematische perspektivische Ansicht eines Sonnenkollektorelements,
Fig. 2 eine Seitenansicht einer Tragplatten-Tragbock-Einheit, auf der der Grundkörper des Sonnenkollektortorelements nach Fig. 1 festlegbar ist, teilweise im Schnitt,
Fig. 3 eine Schnittansicht der Seitenränder aneinander angrenzender, mittels Abdeckschienen miteinander verspannter Grundkörper-Tragplatten-Einheiten und
Fig. 4 eine Schnittansicht des freien Seitenrandes eines Grundkörpers auf der zugehörigen Tragplatte mit einem die Randverspannung mittels Abdeckschienen ermöglichenden Blindrandstück.

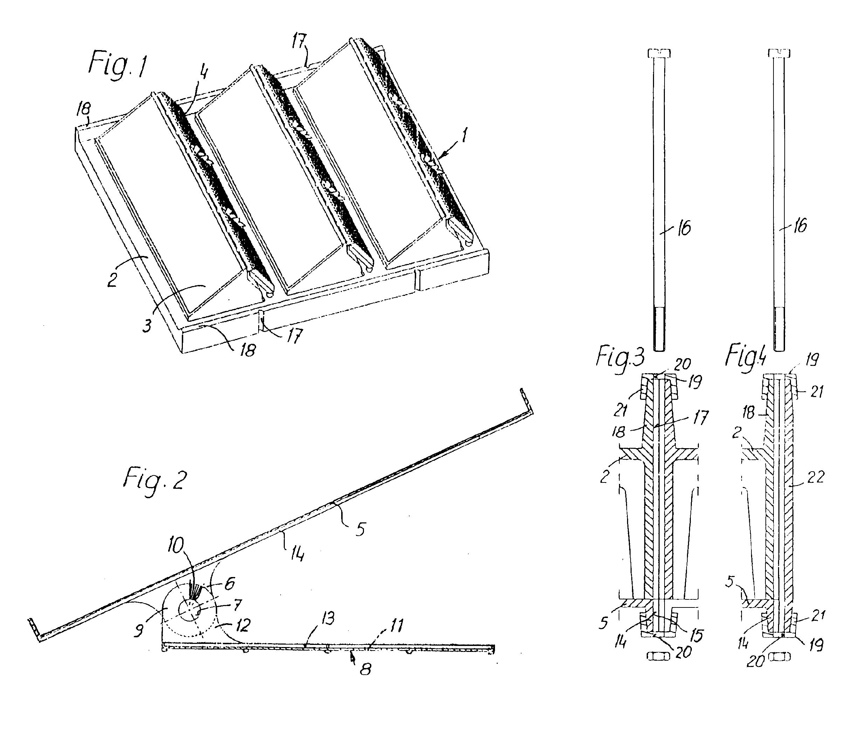

Fig. 1 zeigt ein Sonnenkollektorelement 1, das einen Grundkörper 2 aus wärmeisolierendem Kunststoff mit einem in einer der Sonne zugewandten Ebene liegenden, an ein nicht gezeigtes Wärmeträgernetz anschließbaren Kollektorkanal 3 und einem in einer quer zum Kollektorkanal 3 ausgerichteten Ebene liegenden Absorberkanal 4 aufweist. Für die Abstützung und Lagerung der Grundkörper 2 einer Mehrzahl von Sonnenkollektorelementen 1, die gemeinsam einen Sonnenkollektor bilden, ist jeweils eine Tragplatte 5 vorgesehen, an deren Vorderseite der Grundkörper 2 festspannbar ist. Auf ihrer Rückseite weist die Tragplatte 5 zwei im Abstand voneinander angeordnete Befestigungslaschen 6 mit Bohrungen 7 auf, die koaxial zueinander ausgerichtet sind. Mit Hilfe dieser Laschen 6 ist die Tragplatte 5 an einem Tragbock 8, vlg. Fig. 2, oder an einem Gerüst oder Pfahl, beispielsweise einem Zaunpfahl festlegbar. Zu diesem Zweck ist der Tragbock 8 mit den Befestigungslaschen 6 entsprechenden, analoge Bohrungen aufweisenden Gegenlaschen 9 versehen. Die beiden Laschen 6, 9 jedes Laschenpaares sind auf den einander zugewandten Flächen mit ein festes Verspannen der Laschen in einer bestimmten Winkellage ermöglichenden Rasterelementen 10 versehen. Diese sind durch sich radial zur Achse der Bohrungen 7 erstreckende, um letztere herum gleichmäßig verteilte Rippen gebildet.

Fig. 2 zeigt, daß der Tragbock 8 einen Grundrahmen 11 umfaßt, von dem sich zwei Arme 12 nach aufwärts erstrecken, die in die mit den Tragplattenlaschen 6 verspannbaren Gegenlaschen 9 auslaufen. Die Arme 12 mit den Gegenlaschen 9 befinden sich, wie Fig. 2 deutlich zeigt, in der Nähe des einen Randes des Grundrahmens 11. An seiner Oberseite ist der Grundrahmen 11 des Tragbocks 8 mit Auflageflächen 13 für die Beschwerung mit in Fig. 2 nicht dargestellten Platten aus Stein oder dergleichen versehen. An ihrer Unterseite weist die Tragplatte 5 außer den Befestigungslaschen 6 der Versteifung dienende Leisten 14 auf. Mindestens die sich längs der Seitenränder der Tragplatte 5 erstreckenden Versteifungsleisten 14 sind mit gegebenenfalls halbzylindrischen Bohrungen 15 zur Aufnahme von den Grundkörper 2 durchsetzenden Gegenschrauben 16 versehen. Mit Hilfe dieser Spannschrauben 16 läßt sich der Grundkörper 2 an der Tragplatte 5 fixieren. Wenn die Spannschraube 16 im Randbereich die halbzylindrischen Bohrungen 15 der Tragplatte 5 durchsetzt, verläuft sie auch durch entsprechend halbzylindrische Bohrungen 17 im Bereich erhöhter Ränder 18 des Grundkörpers 2.

Fig. 3 zeigt, daß und wie mit Hilfe der Spannschrauben 16 sowie von Abdeckschienen 19, die die Ränder 14 zweier benachbarter Tragplatten 5 bzw. die Ränder 18 zweier benachbarter Grundkörper 2 übergreifen, die gegenseitige Verspannung möglich ist. Selbstverständlich ist die Lage der Bohrungen 20 in den Abdeckschienen 19 auf die Lage der Bohrungen 15 bzw. 17 in den Rändern 14 der Tragplatte 5 bzw. des Grundkörpers 2 abgestimmt. Die Abdeckschienen 19 besitzen Schenkel 21, die einen spitzen Winkel miteinander einschließen. Mit Hilfe dieser Schenkel 21 übergreifen die Abdeckschienen 19 die Ränder 18 der Grundkörper 2 bzw. die Versteifungsleisten 14 der Tragplatten 5.

Aus Fig. 4 ist ersichtlich, daß den freien Rändern 18, 14 der Grundkörper 2 und der Tragplatten 5 jeweils ein von einer Abdeckschiene 19 erfaßtes Blindrandstück 22 zugeordnet ist. Dieses dient der gemeinsamen Verspannung auch der freien Grundkörperränder 18 an der Tragplatte 5. Es erstreckt sich über die Höhe des Grundkörperrandes 18 und der Versteifungsleiste 14.

## Patentansprüche

1. Vorrichtung zur Festlegung und Abstützung von an der Außenseite eines Gebäudes festlegbaren, miteinander kuppelbaren, einen Sonnenkollektor bildenden Kollektorelementen (1) die jeweils einen Grundkörper (2) mit mindestens einem in einer der Sonne zugewandten Ebene liegenden, an ein Wäremeträgernetz anschließbaren Kollektorkanal (3) aufweisen und denen rückseitig mindestens eine quer abstehende, eine Bohrung (7) zur Aufnahme einer Befestigungsschraube aufweisende Befestigungslasche (6) zur auf die Sonne ausgerichteten Festlegung an einem Trogbock (8), -gerüst oder -pfahl zugeordnet ist,- der eine der Befestigungslasche (6) entsprechende Gegenlasche (9) umfaßt, dadurch gekennzeichnet,
daß die Befestigungslasche (6) auf der Unterseite einer Tragplatte (5) vorgesehen ist, wobei die Tragplatte auf ihrer Unterseite Versteifungsleisten (14) aufweist, daß mindestens die sich längs der Seitenränder der Tragplatte erstreckenden Versteifungsleisten (14) mit halbzylindrischen Bohrungen (15) zur Aufnahme von den Grundkörper (2) in ebenfalls halbzylindrischen Bohrungen (17) durchsetzenden Spannschrauben (16) für die Grundkörperfixierung an der Tragplatte (5) oder für die gegenseitige Verspannung benachbarter Grundkörper (2) auf benachbarten Tragplatten (5) versehen sind und
daß den nach oben weisenden Rändern (18) zweier benachbarter Grundkörper (2) oder den Versteifungsleisten (14) zweier benachbarter Tragplatten (5) ein sie gegenseitig verspannenden Abdeckschiene (19) mit Bohrungen (20) zugeordnet ist, deren Lage auf die Lage der Bohrungen (15) in den Versteifungsleisten (14) der Tragplatten (5) oder der Bohrungen (17) in den Grundkörpern (2) abgestimmt ist.

2. Vorrichtung nach Anspruch 1, dadurch gekennzeichnet, daß die Abdeckschiene (19) die Ränder (18) der Grundkörper (2) oder die benachbarten Versteifungsleisten (14) übergreifende Schenkel (21) aufweist, die miteinander einen spitzen Winkel einschließen.

3. Vorrichtung nach Anspruch 1, dadurch gekennzeichnet, daß den freien Rändern (18) der Grundkörper (2) und der Tragplatten (5) jeweils ein von einer Abdeckschiene (19) erfaßtes Blindrandstück (22) zugeordnet ist, das der gemeinsamen Verspannung auch der freien Ränder (18) an der Tragplatte (5) dient und sich über die Höhe des Randes (18) des Grundkörpers (2) und der Versteifungsleiste (14) der Tragplatte (5) erstreckt.

## Claims

1. Device for securing and supporting collector elements (1), forming a solar collector, which can be secured to the outside of a building and coupled to one another, and which in each case exhibit a basic member (2) having at least one collector channel (3), lying in a plane facing towards the sun and connectable to a heat carrier network, and are allocated on the rear side at least one transversely protruding fastening tab (6), exhibiting a bore (7) for the reception of a fastening screw, for the sun-aligned securement to a bearing trestle (8), frame or pile comprising a counter-tab (9) corresponding to the fastening tab (6), characterised in that the fastening tab (6) is provided on the underside of a bearing plate (5), the bearing plate exhibiting on its underside stiffening strips (14), in that at least those stiffening strips (14) extending along the lateral borders of the bearing plate are provided with semi-cylindrical bores (15) for the reception of clamping screws (16), passing through the basic member (2) in likewise semi-cylindrical bores (17), for the fixing of the basic member to the bearing plate (5) and for the reciprocal bracing of adjacent basic members (2) on adjacent bearing plates (5), and in that the upward-pointing borders (18) of two adjacent basic members (2) or the stiffening strips (14) of two adjacent bearing plates (5) are allocated a cover rail (19), which reciprocally braces them and exhibits bores (20), the position of which is matched to the position of the bores (15) in the stiffening strips (14) of the bearing plates (5) or of the bores (17) in the basic members (2).

2. Device according to Claim 1, characterised in that the cover rail (19) exhibits legs (21) which overlap the borders (18) of the basic members (2) or the adjacent stiffening strips (14) and which form an acute angle with each other.

3. Device according to Claim 1, characterised in that the free borders (18) of the basic members (2) and of the bearing plates (5) are in each case allocated a dummy border piece (22), which is gripped by a cover rail (19) and which serves the joint bracing also of the free borders (18) on the bearing plate (5) and extends over the height of the border (18) of the basic member (2) and of the stiffening strip (14) of the bearing plate (5).

## Revendications

1. Dispositif pour l'orientation et le support d'éléments de collecteur (1) pouvant être montés sur le côté extérieur d'un bâtiment, pouvant être accouplés les uns aux autres, constituant un collecteur solaire, qui présentent, respectivement, un corps de base (2) avec au moins un canal collecteur 3 situé dans un plan orienté vers le soleil, pouvant être raccordé à un réseau caloporteur et auxquels est associée, côté arrière, au moins une attache de fixation (6) faisant saillie transversalement, présentant un perçage (7) destiné à recevoir une vis de fixation, en vue de l'orientation dirigée vers le soleil sur un chevalet (8), une charpente ou poteau de support, qui comprend une contre-attache (9) correspondant à l'attache de fixation (6), caractérisé
en ce que l'attache de fixation (6) est prévue sur le côté inférieur d'une plaque de support (5), la plaque de support présentant sur son côté inférieur des nervures de renforcement (14), en ce qu'au moins les nervures de renforcement (14) s'étendant le long des bords latéraux de la plaque de support sont pourvues de perçages semi-cylindriques (15) destinés à recevoir des vis de serrage (16) traversant le corps de base (2) dans des perçages (17) également semi-cylindriques en vue de la fixation des corps de base sur la plaque de support (5) ou en vue de l'haubanage mutuel de corps de base avoisinants (2) sur des plaques de support avoisinantes (5) et en ce qu'un rail de recouvrement (19) présentant des perçages (20) est associé aux bords (18) dirigés vers le haut de deux corps de base avoisinants (2) ou aux nervures de renforcement (14) de deux plaques de support avoisinantes (5) et qui assurent leur haubanage mutuel, perçages dont l'emplacement est accordé à l'emplacement des perçages (15) dans les nervures de renforcement ( 14) des plaques de support (5) ou des perçages (17) dans les corps de base (2).

2. Dispositif selon la revendication 1, caractérisé en ce que le rail de recouvrement (19) présente des branches (21) recouvrant les bords (18) des corps de base (2) ou les nervures de renforcement avoisinantes (14) et qui forment un angle aigu entre elles.

3. Dispositif selon la revendication 1, caractérisé en ce qu'une pièce de bord aveugle ou d'obturation (22) saisie ou recouverte, respectivement, par un rail de recouvrement (19) est associée aux bords libres (18) des corps de base (2) et des plaques de support (5) qui sert à l'haubanage commun également des bords libres (18) à la plaque de support (5) et qui s'étend sur la hauteur du bord (18) du corps de base (2) et de la nervure de renforcement (14) de la plaque de support (5).
